# EUROPÄISCHE PATENTSCHRIFT

(11) **EP 2 322 826 B1**
(45) Veröffentlichungstag und Bekanntmachung des Hinweises auf die Patenterteilung: **16.01.2013**
(21) Anmeldenummer: 11001281.2
(22) Anmeldetag: 05.08.2005
(51) Int. Cl.: F16H 61/12, F16H 61/688

(54) **Verfahren zur Fehlererkennung und zur Fehlervermeidung beim Schalten eines automatisierten Schaltgetriebes**
Method to detect failure and to prevent failure during shifting of an automated transmission
Procédé pour détecter des erreurs et pour éviter des erreurs pendant le changement des vitesses d'une boîte de vitesses robotisée

(30) Priorität: 02.09.2004 DE 102004042424
(43) Veröffentlichungstag der Anmeldung: 18.05.2011
(62) Teilanmeldung aus: 05017079.4
(73) Patentinhaber: Schaeffler Technologies AG & Co. KG, 91074 Herzogenaurach (DE)
(72) Erfinder: Stengel, Frank, 76534 Baden-Baden (DE); Schweizer, Alexander, 77815 Bühl (DE); Zimmermann, Martin, 77880 Sasbach (DE); Nazari, Behzad, Dr., 73732 Esslingen (DE); Hirt, Joachim, 77704 Oberkirch (DE); Fuß, Martin, 77815 Bühl (DE); Ehrlich, Matthias, 77815 Bühl (DE); Martin, Jens, 76547 Sinzheim-Kartung (DE)

(56) Entgegenhaltungen:
- WO-A1-02/066870
- DE-A1- 10 133 695

## Beschreibung

Die Erfindung betrifft ein Verfahren mit den Merkmalen gemäß dem Oberbegriff des Anspruchs 1.

Automatisierte Schaltgetriebe finden wegen der damit erzielten Komfortverbesserungen, aber vor allem auch wegen möglicher Verbrauchseinsparungen in modernen Kraftfahrzeugen zunehmend Verwendung. Derartige automatisierte Schaltgetriebe sind beispielsweise in der WO 02/066870 A1 sowie der DE 101 33 695 A1 offenbart.

WO 02/066870 A1 wird als der nächste Stand der Technik betrachtet und offenbart die technischen Merkmale der Preamble von Anspruch 1.

Der Erfindung liegt die Aufgabe zugrunde, die Betriebssicherheit solcher automatisierter Schaltgetriebe zu verbessern.

Diese Aufgabe wird durch ein Verfahren mit den Merkmalen gemäß Anspruch 1 gelöst.

Die Lösung der Erfindungsaufgabe wird also erzielt mit einem Verfahren zur Fehlervermeidung beim Schalten eines Parallelschaltgetriebes mit zwei Teilgetrieben mit je einer Kupplung, wobei durch wahlweises Schließen einer der Kupplungen eines der Teilgetriebe in einem Drehmomentenübertragungsweg zwischen einem Antriebsmotor und angetriebenen Rädern eines Fahrzeugs wirksam ist und wenigstens eines der Teilgetriebe wenigstens eine Schaltgasse aufweist, in der zwei Gänge geschaltet werden können, bei welchem Verfahren mit einem Gang der wenigstens einen Schaltgasse des einen Teilgetriebes gefahren wird, anschließend mit einem Gang des anderen Teilgetriebes gefahren wird und während dieses Fahrens bei sicherheitskritischen Schaltungen vor dem Einlegen des anderen Gangs der wenigstens einen Schaltgasse der eine Gang dieser Schaltgasse, mit dem vorher gefahren wurde, in einem vom Einlegen getrennten Arbeitsschritt ausgelegt wird.

Mit dem vorgenannten erfindungsgemäßen Verfahren wird erreicht, dass bei sicherheitskritischen Schaltungen, beispielsweise bei Schaltungen nach einem vorangegangenen Fahrtrichtungswechsel, gefährliche Betriebszustände vermieden werden.

Das vorgenannte Verfahren wird bei Parallelschaltgetrieben angewendet, bei denen eine Betätigungseinrichtung vorgesehen ist mit je einem der Teilgetriebe zugeordneten Hauptbetätigungsgliedern und Nebenbetätigungsgliedern, wobei die Hauptbetätigungsglieder zum Bewegen eines jeweiligen der Schaltglieder zum Einlegen eines Gangs und die Nebenbetätigungsglieder zum Bewegen eines jeweils anderen der Schaltglieder des entsprechenden Teilgetriebes zum Ausrücken eines Gangs vorgesehen sind, einem Wählaktor zum Bewegen der Haupt- und Nebenbetätigungsglieder zu unterschiedlichen Schaltgassen der Teilgetriebe und einem Schaltaktor zum Bewegen der Hauptbetätigungs- und Nebenbetätigungsglieder zum Ein- bzw. Auslegen eines Gangs, bei welchem Verfahren vor dem Einrücken eines Gangs eines Teilgetriebes mit Hilfe eines Hauptbetätigungsgliedes das zugehörige Nebenbetätigungsglied mittels des Wählaktors in die zu dem Gang gehörende Schaltgasse bewegt wird und durch Bewegen des Nebenbetätigungsgliedes mit Hilfe des Schaltaktors ein eingelegter Gang der Schaltgasse ausgelegt wird.

Bevorzugt wird das Verfahren angewendet, wenn ein Rückwärtsgang und ein zweiter Vorwärtsgang in einer ersten Schaltgasse eines Teilgetriebes angeordnet sind und ein erster Vorwärtsgang einer Schaltgasse des anderen Teilgetriebes zugehört, bei welchem Verfahren nach einer Rückwärtsfahrt und anschließender Vorwärtsfahrt im ersten Gang vor dem Einlegen des zweiten Gangs die Gänge der ersten Schaltgasse ausgelegt werden.

Die Erfindung, die in unterschiedlichsten Fahrzeugen mit unterschiedlichsten Antriebsarten und Antriebsmotoren und unterschiedlichsten automatisierten Schaltgetrieben einsetzbar ist, wird im Folgenden anhand schematischer Zeichnungen beispielsweise und mit weiteren Einzelheiten erläutert.

In den Figuren stellen dar:
- Figur 1: ein Schema einer an sich bekannten Betätigungseinrichtung für ein automatisiertes Schaltgetriebe;
- Figur 2: ein Schaltschema eines automatisierten Schaltgetriebes mit Darstellung von Betätigungsendstellungen;
- Figur 3: ein Schema eines an sich bekannten Parallelschaltgetriebes;
- Figur 4.: einen Teil einer Betätigungseinrichtung für ein Parallelschaltgetriebe in perspektivischer Darstellung; und
- Figuren 5 bis 7: Schaltschemata zur Erläuterung eines erfindungsgemäßen Verfahrens.

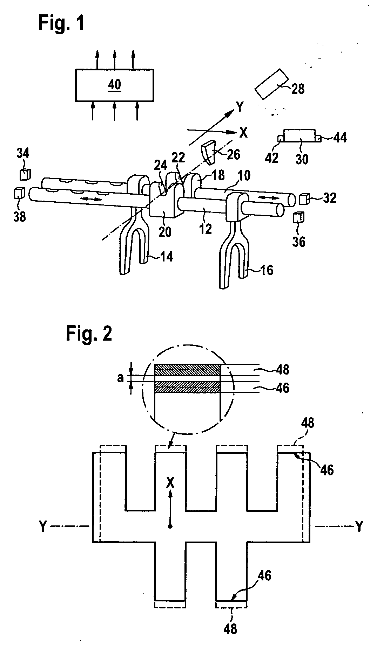

Gemäß Figur 1 gehört zu einem an sich bekannten, nicht dargestellten automatisierten Schaltgetriebe eine Einrichtung mit getriebeinternen Schaltgliedern und einer getriebeexternen Betätigungseinrichtung. Die getriebeinternen Schaltglieder enthalten im dargestellten Beispiel zwei parallel zueinander beweglich angeordnete Schaltstangen 10, 12 mit je einer Schaltgabel 14, 16 und einem Schaltblock 18, 20 mit einer Aussparung 22, 24 an der Oberseite.

Für einen Eingriff in jeweils eine der Aussparungen 22, 24 ist ein Schaltfinger 26 vorgesehen, der mittels eines Wählaktors 28 in eine Y-Richtung quer zur Bewegbarkeitsrichtung der Schaltstangen 10, 12 bewegbar ist und mit einem Schaltaktor 30 parallel zur Bewegbarkeitsrichtung der Schaltstangen 10, 12 bewegbar ist. Der Schaltfinger 26 ist in an sich bekannter Weise beispielsweise an einer an einem Gehäuse des Getriebes verschieb- und schwenkbar angebrachten Stange befestigt, die mit Hilfe des Wählaktors 28 verschiebbar ist und mit Hilfe des Schaltaktor 30 um ihre Längsachse drehbar ist.

Das Schalten geschieht derart, dass der nach Betätigen des Wählaktors 28 in einer der Aussparungen 22, 24 befindliche Schaltfinger 26 gemäß der Figur beispielsweise nach links verschoben bzw. verschwenkt wird, wobei die zugehörige Schaltgabel eine an einer Getriebewelle befestigte Kupplungsmuffe verschiebt und einen Gang einlegt. Bei einer weiteren Schaltung wird dieser Gang ausgelegt, indem der entsprechende Schaltblock durch Bewegen des Schaltfingers 26 zurück in die Wählgasse bewegt wird und dann, je nach zu schaltendem Gang, aus der Wählgasse heraus zum Einlegen des "gegenüberliegenden" Gangs mit Hilfe der gleichen Kupplungsmuffe bewegt wird, oder zunächst aus dem jeweiligen Schaltblock längs der Wählgasse (Y-Richtung) in Eingriff mit dem benachbarten Schaltblock gebracht wird (benachbarte Schaltgasse) und in dieser Schaltgasse ein Gang geschaltet wird.

Zur Funktionsüberwachung der Betätigungseinrichtung sind für die getriebeinterne Schalteinrichtung Anschläge 32, 34, 36 und 38 vorgesehen, die die Bewegbarkeit der Schaltstangen oder der starr damit verbundenen Schaltblöcke in die eine oder andere X-Richtung begrenzen. Deren Erreichen wird beispielsweise durch plötzlichen Anstieg der Stromaufnahme des Wählaktors oder durch dessen Stillstand detektiert oder unmittelbar durch entsprechend positionierte Endschalter. Wenn eine durch die Anschläge definierte Schaltendstellung erfasst wird, wird der Schaltaktor abgestellt.

Die Bewegbarkeit des Schaltfingers 26 in X-Richtung mittels des Schaltaktors ist durch Anschläge 42, 44 begrenzt. Diese Anschläge 42 und 44 können mechanische, gegebenenfalls mit Endschaltern versehene Anschläge sein. Sie können auch "elektronische Anschläge" sein, die durch einen Bewegungssensor oder ein Inkrementzähler gebildet sein können, der die Aktorstellung 30 erfasst und in vorbestimmten, markierten Stellungen referenziert wird, so dass die Aktorstellung absolut bekannt ist. Das Erreichen der Anschläge 42 und 44 wird von der Steuereinrichtung 40 erfasst und führt zum Beenden der Bewegung des Schaltfingers 26 in die jeweilige X-Richtung bei Erreichen des Anschlags.

Figur 2 verdeutlicht die Verhältnisse anhand eines Schaltbildes. Mit Y-Y ist die Wählgasse bezeichnet. Senkrecht dazu verlaufen vier Schaltgassen (X-Richtung der Figur 1), wobei in den beiden äußeren Schaltgassen jeweils nur ein Gang schaltbar ist. Die durchgezogenen Anschlaglinien 46 am Ende jeder Schaltgasse bezeichnen die durch Anschläge definierten Schaltendstellungen der Schaltgabeln bzw. damit starr verbundener Teile des Getriebes. Die gestrichelten Anschlaglinien 48, die von der Wählgasse weiter entfernt sind als die Anschlaglinien 46, bezeichnen die Betätigungsendstellungen der getriebeexternen Betätigungseinrichtung, die ebenfalls durch mechanische Anschläge, oder, wie erläutert, durch elektronische Anschläge definiert sind.

Der eingekreiste Ausschnitt der Figur 2 zeigt die Toleranzbänder der jeweiligen Endstellungen, wobei sichergestellt ist, dass das der Anschlaglinie 48 zugeordnete Toleranzband der Betätigungsendstellung der getriebeexternen Betätigungseinrichtung (Aktor 30) vollständig außerhalb des Toleranzbandes liegt, innerhalb dessen die Anschläge für die getriebeexternen Schaltglieder liegen. Der Abstand beider Toleranzbänder ist mit a bezeichnet.

Ein positives Maß a, beispielsweise im Millimeterbereich, muss auch unter Berücksichtigung der Elastizitäten, Spiele, Temperaturausdehnungen und Verschleiß während der Lebensdauer für alle Gangendlagen gewährleistet sein. Es versteht sich, dass dabei die Messgenauigkeit berücksichtigt werden muss, mit der die Stellung des Schaltaktors 30, beispielsweise von einem Inkrementzähler, erfasst wird.

Im Normalbetrieb muss von der Steuereinrichtung 40 beim Einlegen eines Ganges eine Schaltendstellung erfasst werden, die durch einen der inneren Anschläge (32, 34, 36, 38 der Figur 1) bzw. durch eine Anschlaglinie 46 definiert ist. Diese Endstellungen sind in einem Speicher der Steuereinrichtung 40 gespeichert. Sie werden beispielsweise dadurch erkannt, dass der Aktorstrom plötzlich zunimmt bzw. der Aktor stehen bleibt.

Wenn eine Schaltendstellung beim Einlegen eines Ganges überschritten wird und die beim Einlegen eines Ganges erreichte Endstellung im Toleranzband 48 der Betätigungsendstellung liegt bzw. durch einen der Anschläge 42, 44 definiert ist, deutet dies auf einen Bruch oder eine Deformation in der inneren Schaltung. Ein solcher Defekt kann dem Fahrer signalisiert werden, wobei ein Notlaufbetrieb aktiviert werden kann, in dem eine Werkstatt angefahren wird, wenn beispielsweise ein anderer Gang sich noch einwandfrei einlegen lässt.

Wenn der Schaltaktor beim Einlegen eines Ganges den Schaltfinger 26 über eine durch das Toleranzband 48 hinausgehende Stellung bewegt, so dass kein Anschlag erfasst wird, deutet dies auf einen Fehler in der Inkrementalwegmessung, oder auf einen Bruch in der externen Betätigungseinrichtung. Es erfolgt dann eine Fehlermeldung mit Abschaltung des Systems.

Wenn beim Einlegen eines Ganges der Schaltaktor 30 außerhalb einer durch die Anschläge 42 und 44 definierten Stellung zum Stehen kommt, kann dies durch eine Deformation oder einen Bruch der getriebeexternen Betätigungseinrichtung oder der inneren Schaltung im Getriebe oder auf einem Fehler bei der Inkrementalwegmessung beruhen. Es erfolgt eine entsprechende Fehlermeldung und eine Systemabschaltung.

Mit Hilfe der geschilderten, voneinander unabhängigen Erfassung der getriebeinternen Schaltendstellungen und der getriebeexternen Betätigungsendstellungen, ist somit eine gezielte Fehlerdiagnose möglich. Weiter kann in bestimmten Zuständen ein Notlauf aktiviert werden, so dass das System nicht unnötig abgestellt wird.

Den einzelnen Gängen können unterschiedliche Schaltendstellungen bzw. Anschläge zugeordnet werden. Wenn die Schaltendstellung des Rückwärtsgangs beispielsweise näher an der Wählgasse liegt als die Schaltendstellungen der Vorwärtsgänge, ist eine Unterscheidung zwischen Rückwärts- und Vorwärtsgang möglich, ohne dass die jeweilige Wählstellung erfasst werden muss. Der Rückwärtsgang kann auf diese Weise sicher und rasch erkannt werden, wodurch eine nicht dargestellte Kupplung früher geschlossen werden kann und der Gangwechsel schneller abgeschlossen werden kann.

Das beispielhaft beschriebene Verfahren kann auf den Wählmechanismus ausgeweitet werden indem getriebeinterne und getriebeexterne Anschläge, beispielsweise zur Begrenzung der Bewegbarkeit des Schaltfingers, in Wählrichtung vorgesehen werden.

Das geschilderte Verfahren ist sowohl bei konventionellen automatisierten Schaltgetriebe mit lediglich einer Kupplung einsetzbar, bei denen während eines Gangwechsels eine Zugkraftunterbrechung erfolgt, als auch bei Parallelschaltgetrieben einsetzbar, bei denen Gangwechsel zugkraftunterbrechungsfrei erfolgen können.

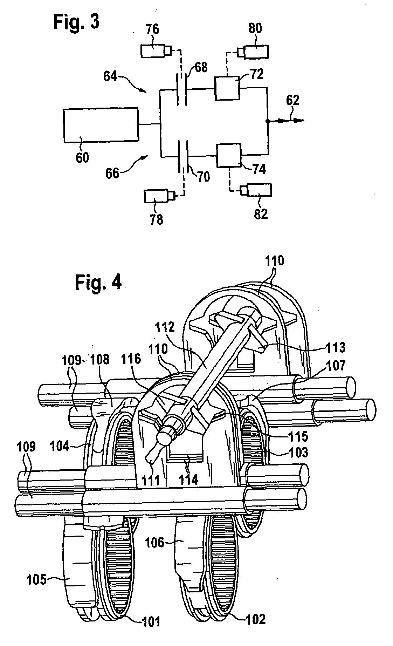

Figur 3 zeigt den prinzipiellen Aufbau eines solchen an sich bekannten Parallelschaltgetriebes. Figur 4 zeigt einen Teil einer Betätigungseinrichtung für ein solches Parallelschaltgetriebe. Die Figuren sind der DE 102 06 561 A1 entnommen, in der Wirkungsweise und Betätigung von Parallelschaltgetrieben detailliert erläutert sind.

Zwischen einem Antriebsmotor 60 und einem zu angetriebenen Rädern eines Fahrzeugs führenden Abtrieb 62 sind zwei Antriebsstränge 64 und 66 gebildet, über die der Momentenfluss erfolgen kann. Jedem der Antriebsstränge ist eine Kupplung 68 bzw. 70 und ein Teilgetriebe 72 bzw. 74 zugeordnet.

Betätigungseinrichtungen für die Kupplungen sind mit 76 bzw. 78 bezeichnet. Betätigungseinrichtungen der Teilgetriebe 72 bzw. 74 sind mit 80 bzw. 82 bezeichnet.

Übersetzungsstufen, zwischen denen ein zugkraftunterbrechungsfreier Wechsel möglich sein soll, sind unterschiedlichen Teilgetrieben zugeordnet. Beispielsweise gehören die Gänge 1, 3 und 5 zu einem der Teilgetriebe und die Gänge 2, 4, 6 und R zu dem anderen Teilgetriebe.

Figur 4 zeigt Teile einer den beiden Teilgetrieben 72 und 74 gemeinsamen Betätigungseinrichtung (die die Betätigungseinrichtung 80 und 82 der Figur 3 zusammenfasst).

Mit nicht dargestellten Wellen der Teilgetriebe 72 und 74 drehfest verbundene Kupplungsmuffen 101, 102, 103 und 104 werden von Schaltgabeln 105, 106, 107 und 108 bewegt. Die Kupplungsmuffen 101 und 104 sind dem einen der Teilgetriebe zugeordnet. Die Kupplungsmuffen 102 und 103 sind dem anderen Teilgetriebe zugeordnet. Die äußere Betätigungseinrichtung enthält ein erstes Hauptbetätigungsglied 111 in Form eines Schaltfingers und ein in Figur 4 nicht sichtbares weiteres Hauptbetätigungsglied, mit denen Gänge einlegbar sind. Weiter sind Nebenbetätigungsglieder 113, 116 vorgesehen, die sicherstellen, dass jeweils alle anderen Gänge des selben Teilgetriebes ausgelegt sind. Die Schaltgabeln 105, 106, 107, 108 sind auf Wellen 109 axial verschiebbar und ihre Mäuler sind derart ausgebildet, dass sie jeweils mit einem Hauptbetätigungsglied 111 (Schaltfinger) oder einem doppelnockenartig ausgebildeten Nebenbetätigungsglied 113, 116 in Eingriff kommen. Dazu sind erste Teilbereiche 114 zur Verbindung mit einem Hauptbetätigungsglied 111 und zweite Teilbereiche 115 zur Verbindung mit einem Nebenbetätigungsglied 113 vorgesehen. Zum Einlegen eines Gangs tritt beispielsweise das Hauptbetätigungsglied 111 mit einem Endbereich 110 der entsprechenden Schaltgabel 105 oder 106 in Verbindung, indem eine mit dem Betätigungsgliedern versehene Schaltwelle 112 von einem Wählaktor in axialer Richtung verschoben wird. Zugleich tritt das Nebenbetätigungsglied 113 jeweils mit der entsprechenden Schaltgabel 107 oder 108 in Verbindung, die zum selben Teilgetriebe gehört. Eine Drehung der Schaltwelle 112 mittels eines Schaltaktors verschwenkt das Hauptbetätigungsglied 111, durch die Schaltgabel 105 bzw. 106 auf der Welle 109 und damit auch die zugehörige Kupplungsmuffe 101 oder 102 verschoben wird und die entsprechende Übersetzungsstufe eingelegt wird. Zugleich bewirkt die Verdrehung des Nebenbetätigungsgliedes 113 ein Auslegen des entsprechenden Gangs, falls dieser eingelegt ist. Für die Betätigungseinrichtung gemäß Figur 4 können ähnliche Betätigungsendstellungen definiert sein, wie anhand der Figuren 1 und 2 erläutert.

Ein Problem bei einem Doppelkupplungsgetriebe, wie es anhand der Figuren 3 und 4 beschrieben wurde und an sich bekannt ist, liegt im Folgendem:

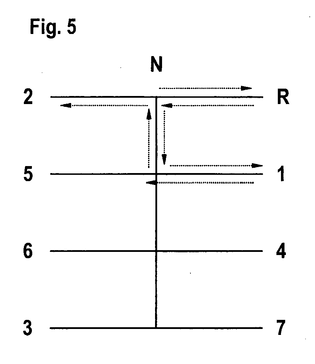

Figur 5 zeigt ein Schaltschema eines solchen Doppelkupplungsgetriebes, wobei die senkrechte Linie die Wählgasse bezeichnet. Bei in der Wählgasse befindlichem Hauptbetätigungsglied (Schaltfinger) ist kein Gang geschaltet, d.h. das Getriebe befindet sich in Neutral (N) und die Schaltwelle kann vom Wählaktor zwischen den einzelnen waagerecht dargestellten Schaltgassen bewegt werden. Wenn die Schaltwelle vom Schaltaktor bei in einer der Schaltgassen befindlichen Hauptbetätigungsglied in die eine oder die andere Richtung verdreht wird, werden die angegebenen Gänge geschaltet. Dabei sind die Gänge R, 2, 4 und 6 dem einen Teilgetriebe und die Gänge 1, 3, 5 und 7 dem anderen Teilgetriebe zugeordnet.

Im Folgenden wird ein an sich bekannter Schaltablauf anhand der Pfeile der Figur 5 erläutert, die die Bewegung des Hauptbetätigungsgliedes angeben. Ausgehend der Neutralstellung schaltet das Hauptbetätigungsglied den Rückwärtsgang R, wird dann nach Neutral zurückbewegt und wechselt zum anderen Teilgetriebe, in dem aus Neutral der erste Gang eingelegt wird. Dies kann geschehen, während das Fahrzeug rückwärts fährt. Nach diesem Vorgang wird das Hauptbetätigungsglied nach Neutral bewegt und wiederum ein Gassenwechsel zum anderen Teilgetriebe vorgenommen. Nach erfolgter Rückwärtsfahrt schließt die Getriebesteuerung die Kupplung für das ungerade Teilgetriebe und es kann vorwärts angefahren werden. Ab diesem Zeitpunkt ist der Antriebsstrang zum geraden Teilgetriebe geöffnet und es kann der zweite Gang eingelegt werden.

Als eine potentielle Fehlermöglichkeit könnte während des Einlegens des ersten Ganges der Kraftfluss zum Hauptbetätigungselement abreißen, der erste Gang aber dennoch vollständig eingelegt worden sein, wenn beispielsweise nach Einlegen des ersten Ganges das Hauptbetätigungsglied (Schaltfinger) verschleißt oder bricht. Wenn das Getriebe nicht mit den beiden Endlagenbegrenzungen (getriebeintern und getriebeextern) gemäß Figur 2 ausgerüstet ist, sondern nur mit der getriebeexternen Endlagenerkennung bzw. -begrenzung, so würde nach einem solchen beispielhaften Bruch oder Verschleiß des Schaltfingers die Getriebesteuerung davon ausgehen, dass der zweite Gang ordnungsgemäß eingelegt wurde, wenn der getriebeexterne bzw. Wählaktor interne Anschlag als Schaltwegbegrenzung erkannt wurde. Tatsächlich wäre dann aber immer noch der R-Gang im geraden Teilgetriebe eingelegt. Da der vorgenannte Fehler von der Getriebesteuerung nicht erfasst wird, würde die Kupplung für das gerade Teilgetriebe geschlossen. In diesem Augenblick könnten je nach Fahrsituation sehr gefährliche Folgen eintreten, beispielsweise Anfahrt in die falsche Richtung, Blockieren der Räder oder die Zerstörung des Getriebes.

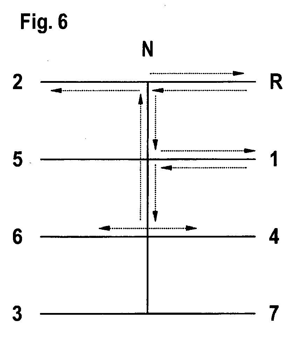

Figur 6 zeigt einen Schaltablauf zur Lösung des vorgenannten Problems:

Das Einlegen des Rückwärtsganges R und des ersten Gangs erfolgt wie anhand Figur 5 erläutert. Anschließend wird jedoch das Hauptbetätigungsglied zur Schaltgasse 6/4 bewegt, die zum gleichen Teilgetriebe gehört wie die Gasse 2/R. In dieser Stellung wird die Schaltwelle mit dem Haupt- und Nebenbetätigungsglied mit einem Verdrehwinkel bewegt, der einer Auslegebewegung entspricht. Voraussetzung ist, dass Kraftfluss zum Nebenbetätigungselement besteht. Anschließend wird das Hauptbetätigungselement nach Neutral gestellt und in die Gasse 2/R bewegt. Dort wird nun planmäßig versucht, den zweiten Gang einzulegen.

Kern der Erfindung ist somit, für potentielle, sicherheitskritische Gangstellungen zuerst das Nebenbetätigungselement in die zu schaltende Gasse zu bewegen und dort die geschalteten Gänge auszulegen. Anschließend wird das Hauptbetätigungsglied in die zu schaltende Gasse bewegt und die vorgesehene Schaltung durchgeführt.

Die beschriebene Sicherheitsschaltung wird insbesondere bei einem Fahrtrichtungswechsel ausgeführt; sie kann jedoch auch bei anderen Schaltungen ausgeführt werden, bei denen durch einen Ausfall des Hauptbetätigungsgliedes, wie vorstehend beispielhaft geschildert, ein gefährlicher Schaltzustand auftreten kann.

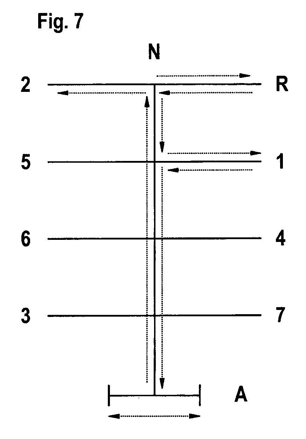

Alternativ zu dem geschilderten Verfahren, bei dem immer erst in einer Gasse des gleichen Teilgetriebes eine Auslegeschaltung durchgeführt wird, kann, wie in Figur 7 dargestellt, eine neutrale Auslegegasse A angefahren werden, die von den Gassen eines Teilgetriebes einen ähnlichen Abstand hat wie der Abstand zwischen den Gasse eines Teilgetriebes untereinander. Die Auslegegasse muss somit mit dem durch das Zusammenwirken der Hauptbetätigungsglieder und der Nebenbetätigungsglieder erzielten "Active Interlock" kompatibel sein. Diese Neutralgasse lässt aufgrund ihrer Begrenzung nur Schaltwinkel zu, die dem Auslegeweg eines Ganges entsprechen.

### Bezugszeichenliste

- 10: Schaltstange
- 12: Schaltstange
- 14: Schaltgabel
- 16: Schaltgabel
- 18: Schaltblock
- 20: Schaltblock
- 22: Aussparung
- 24: Aussparung
- 26: Schaltfinger
- 28: Wählaktor 102
- 30: Schaltaktor
- 32: Anschlag
- 34: Anschlag
- 36: Anschlag
- 38: Anschlag
- 40: Steuereinrichtung
- 42: Anschlag
- 44: Anschlag
- 46: Anschlaglinie
- 48: Anschlaglinie
- 60: Antriebsmotor
- 62: Abtrieb
- 64: Antriebsstrang
- 66: Antriebsstrang
- 68: Kupplung
- 70: Kupplung
- 72: Teilgetriebe
- 74: Teilgetriebe
- 76: Betätigungseinrichtung
- 78: Betätigungseinrichtung
- 80: Betätigungseinrichtung
- 82: Betätigungseinrichtung
- 101: Kupplungsmuffe
- 102: Kupplungsmuffe
- 103: Kupplungsmuffe
- 104: Kupplungsmuffe
- 105: Schaltgabel
- 106: Schaltgabel
- 107: Schaltgabel
- 108: Schaltgabel
- 109: Welle
- 110: Endbereich
- 111: Hauptbetätigungsglied
- 112: Schaltwelle
- 113: Nebenbetätigungsglied
- 114: Teilbereich
- 115: Teilbereich
- 116: Nebenbetätigungsglied

## Patentansprüche

1. Verfahren zur Fehlervermeidung beim Schalten eines Parallelschaltgetriebes mit zwei Teilgetrieben (72, 74) mit je einer Kupplung (68, 70), wobei durch wahlweises Schließen einer der Kupplungen eines der Teilgetriebe in einem Drehmomentübertragungsweg zwischen einem Antriebsmotor (60) und angetriebenen Rädern (62) eines Fahrzeugs wirksam ist und wenigstens eines der Teilgetriebe wenigstens eine Schaltgasse aufweist, in der zwei Gänge geschaltet werden können, bei welchem Verfahren mit einem Gang der wenigstens einen Schaltgasse des einen Teilgetriebes gefahren wird, anschließend mit einem Gang des anderen Teilgetriebes gefahren wird und während dieses Fahrens bei sicherheitskritischen Schaltungen vor dem Einlegen des anderen Gangs der wenigstens einen Schaltgasse der eine Gang dieser Schaltgasse, mit dem vorher gefahren wurde, in einem vom Einlegen getrennten Arbeitsschritt ausgelegt wird, wobei eine Betätigungseinrichtung vorgesehen ist mit je einem der Teilgetriebe (72, 74) zugeordneten Hauptbetätigungsgliedern (111) und Nebenbetätigungsgliedern (113, 116), wobei die Hauptbetätigungsglieder zum Bewegen eines jeweiligen der Schaltglieder (105, 106, 107, 108) zum Einlegen eines Gangs und die Nebenbetätigungsglieder zum Bewegen eines jeweils anderen der Schaltglieder (105, 106, 107, 108) des entsprechenden Teilgetriebes zum Ausrücken eines Gangs vorgesehen sind, einem Wählaktor zum Bewegen der Haupt- und Nebenbetätigungsglieder zu unterschiedlichen Schaltgassen der Teilgetriebe und einem Schaltaktor zum Bewegen der Hauptbetätigungs- und Nebenbetätigungsglieder zum Ein- bzw. Auslegen eines Gangs, **dadurch gekennzeichnet, dass** bei diesem Verfahren vor dem Einrücken eines Gangs eines Teilgetriebes mit Hilfe eines Hauptbetätigungsgliedes im vom Einlegen getrennten Arbeitsschritt ein zum Teilgetriebe gehöriges Nebenbetätigungsglied mittels des Wählaktors in die zu dem Gang gehörende Schaltgasse bewegt wird und durch Bewegen des Nebenbetätigungsgliedes mit Hilfe des Schaltaktors ein eingelegter Gang der Schaltgasse ausgelegt wird, und anschließend in einem anderen Arbeitsschritt das Hauptbetätigungsglied in die zu dem Gang gehörende Schaltgasse bewegt wird und der Gang mittels des Hauptbetätigungsglieds eingerückt wird.

2. Verfahren nach Anspruch 1 oder 2, **dadurch gekennzeichnet, dass** ein Rückwärtsgang und ein zweiter Vorwärtsgang in einer ersten Schaltgasse eines Teilgetriebes angeordnet sind und ein erster Vorwärtsgang einer Schaltgasse des anderen Teilgetriebes zugehört, bei welchem Verfahren nach einer Rückwärtsfahrt und anschließender Vorwärtsfahrt im ersten Gang vor dem Einlegen des zweiten Gangs die Gänge der ersten Schaltgasse ausgelegt werden.

3. Verfahren nach Anspruch 1, **dadurch gekennzeichnet, dass** ein Nebenbetätigungsglied in die zu dem Gang gehörende Schaltgasse bewegt wird, indem das Hauptbetätigungsglied in eine andere Schaltgasse bewegt wird

## Claims

1. Method for preventing failure during gearshifts in a parallel shift gearbox having two component transmissions (72, 74) with in each case one clutch (68, 70), wherein by alternate closure of one of the clutches, one of the component gearboxes is made active in a torque transmission path between a drive engine (60) and driven wheels (62) of a vehicle, and at least one of the component gearboxes has at least one shift lane in which two gears can be engaged, in which method driving is performed using one gear of the at least one shift lane of one component gearbox, subsequently driving is performed using one gear of the other component gearbox, and during said driving, in the event of safety-critical gearshifts, before the engagement of the other gear of the at least one shift lane, said one gear of said shift lane with which driving was performed previously is disengaged in a working step separate from the engagement, wherein an actuating device is provided which has main actuation elements (111) and secondary actuation elements (113, 116) assigned to in each case one of the component gearboxes (72, 74), wherein the main actuation elements are provided for moving a respective one of the shift elements (105, 106, 107, 108) in order to engage a gear and the secondary actuation elements are provided for moving a respective other one of the shift elements (105, 106, 107, 108) of the corresponding component gearbox in order to disengage a gear, having a selector actuator for moving the main and secondary actuation elements to different shift lanes of the component gearbox, and having a shift actuator for moving the main actuation and secondary actuation elements in order to engage or disengage a gear, **characterized in that**, in said method, before the engagement of one gear of one component gearbox by means of a main actuation element, in the working step which is separate from the engagement, a secondary actuation element associated with the component gearbox is moved by means of the selector actuator into the shift lane associated with the gear, and an engaged gear of the shift lane is disengaged by movement of the secondary actuation element by means of the shift actuator, and subsequently, in another working step, the main actuation element is moved into the shift lane associated with the gear, and the gear is engaged by means of the main actuation element.

2. Method according to Claim 1, **characterized in that** a reverse gear and a second forward gear are arranged in a first shift lane of one component gearbox, and a first forward gear is associated with a shift lane of the other component gearbox, in which method, after reverse driving and subsequent forward driving in the first gear, the gears of the first shift lane are disengaged before the engagement of the second gear.

3. Method according to Claim 1, **characterized in that** a secondary actuation element is moved into the shift lane associated with the gear by virtue of the main actuation element being moved into a different shift lane.

## Revendications

1. Procédé pour éviter des erreurs pendant le changement de vitesses d'une boîte de vitesses parallèle comprenant deux boîtes de vitesses partielles (72, 74) dotées chacune d'un embrayage (68, 70), par fermeture de manière sélective, l'un des embrayages de l'une des boîtes de vitesses partielles opérant dans un chemin de transmission de couple entre un moteur d'entraînement (60) et des roues entraînées (62) d'un véhicule et au moins l'une des boîtes de vitesses partielles comprenant au moins une voie de changement de vitesses dans laquelle deux vitesses peuvent être passées, dans lequel procédé on roule avec une vitesse de l'au moins une voie de changement de vitesses de l'une des boîtes de vitesses partielles puis on roule avec une vitesse de l'autre boîte de vitesses partielles et, pendant cette conduite, en cas de changements de vitesses critiques pour la sécurité, avant l'enclenchement de l'autre vitesse de l'au moins une voie de changement de vitesses, l'une des vitesses de cette voie de changement de vitesses avec laquelle on avait roulé précédemment est désenclenchée lors d'une étape de travail séparée de l'enclenchement, un dispositif d'actionnement étant prévu, lequel comprend des éléments d'actionnement principaux (111) et des éléments d'actionnement auxiliaires (113, 116) associés à l'une des boîtes de vitesses partielles (72, 74) respectives, les éléments d'actionnement principaux étant prévus pour déplacer un élément de sélection (105, 106, 107, 108) respectif pour enclencher une vitesse et les éléments d'actionnement auxiliaires étant prévus pour déplacer un autre élément de sélection (105, 106, 107, 108) respectif de la boîte de vitesses partielle correspondante pour désenclencher une vitesse, un actionneur de sélection pour déplacer les éléments d'actionnement principaux et auxiliaires jusqu'à des voies de changement de vitesses différentes de la boîte de vitesses partielle et un actionneur de changement de vitesse pour déplacer les éléments d'actionnement principaux et les éléments d'actionnement auxiliaires pour enclencher ou désenclencher une vitesse, **caractérisé en ce que**, dans ce procédé, avant l'enclenchement d'une vitesse d'une boîte de vitesses partielle, à l'aide d'un élément d'actionnement principal lors de l'étape de travail séparée de l'enclenchement, un élément d'actionnement auxiliaire appartenant à la boîte de vitesses partielle est déplacé au moyen de l'actionneur de sélection dans la voie de changement de vitesses appartenant à la vitesse et, par déplacement de l'élément d'actionnement auxiliaire à l'aide de l'actionneur de changement de vitesses, une vitesse enclenchée de la voie de changement de vitesses est désenclenchée, et ensuite, lors d'une autre étape de travail, l'élément d'actionnement principal est déplacé dans la voie de changement de vitesses appartenant à la vitesse et la vitesse est enclenchée au moyen de l'élément d'actionnement principal.

2. Procédé selon la revendication 1, **caractérisé en ce qu'**une vitesse de marche arrière et une deuxième vitesse de marche avant sont disposées dans une première voie de changement de vitesses d'une boîte de vitesses partielle et une première vitesse de marche avant appartient à une voie de changement de vitesses de l'autre boîte de vitesses partielle, dans lequel procédé, après une marche arrière et une marche avant subséquente dans une première vitesse, avant l'enclenchement de la deuxième vitesse, les vitesses de la première voie de changement de vitesse sont désenclenchées.

3. Procédé selon la revendication 1, **caractérisé en ce qu'**un élément d'actionnement auxiliaire est déplacé dans la voie de changement de vitesses appartenant à la vitesse tandis que l'élément d'actionnement principal est déplacé dans l'autre voie de changement de vitesses.
